# EUROPEAN PATENT APPLICATION

(11) **EP 2 007 072 A1**
(43) Date of publication of application: **24.12.2008**
(21) Application number: 07012012.6
(22) Date of filing: 19.06.2007
(51) Int. Cl.: H04L 12/28

(54) **Method for determining user port information for central functions**

(71) Applicant: Nokia Siemens Networks Oy, 02610 Espoo (FI)
(72) Inventor: Schmidtke, Uwe, 17493 Greifswald (DE)
(74) Representative: Bruglachner, Thomas E.

(57) **Abstract**

The present invention relates to a method for determining user port (2) information for a central function (1), wherein for the central function in a central position (9) the information is necessary, from which user interface a corresponding packet (14) derives. The central function (1) is centrally implemented at a downstream position, at which the user port (2) information is not available. The user port (2) is located at a first access node (3), whereas the central function (1) is located in the central position (9), characterized in that, a packet extension (10) is attached to the packet (14), the packet extension (10) is read out directly from the packet (14) at the central position (9).

## Description

### Technical Field

The present invention relates to a method for transporting and determining user port information for central services in an access network. It is important for particular functions in a network node, from which user interface a corresponding packet derives.

### Background Art

The present invention relates to a method for determining user port information for a central function, wherein for the central function in a central position the information is necessary, from which user interface a corresponding packet derives. The central function is centrally implemented at an upstream position, at which the user port information is not available. The user port is located at a first access node, whereas the central function is located in the central position, according to the preamble part of claim 1.

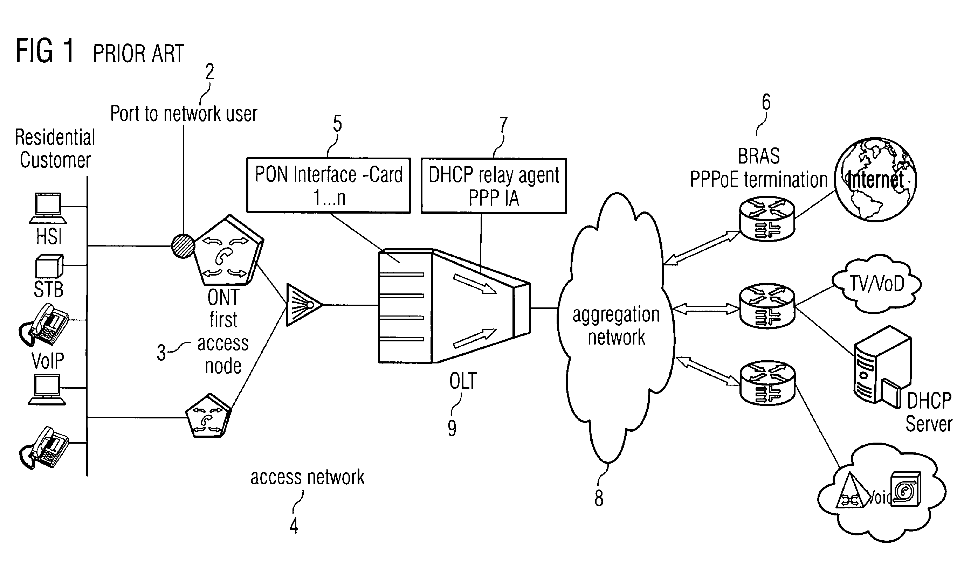

Such a method is known in the prior art and shown in figure 1.

In Figure 1 an example for a GPON access network is illustrated. A user port is located at an ONT (Optical Network Terminal), however a central function is located in an OLT (Optical Line Termination).

For particular functions in a network node it is necessary to know, from which user interface of the access network a corresponding packet derives. Examples for such central functions in a network node are a DHCP relay agent or a PPP intermediate agent. The operation mode of the DHCP relay agent depends on which user requests the corresponding DHCP process. Depending on this information, the DHPC process is allowed, a corresponding provider network is chosen, in which the DHCP server is located or an option is entered into the packet, which additionally provides information (e.g. DHCP option 82). Exactly the same dependencies exist with a PPP intermediate agent.

A further example is a central function for authentication of a user. The information, from which user port (UNI) the packet for authentication derives, decides the further authentication process.

In contrast to the necessity that the information about the user port (UNI) is necessary, is the fact that such functions are often centrally implemented. Centrally means, at an upstream position, at which the information about the user port (UNI) is no longer available. "Downstream" characterizes a transmission from a server to an end user. A downstream transmission can be in the form of a signal being transmitted from a server to a workstation across a network, such as a LAN, or a signal being sent from a cable service provider to a customer.

That is, the user port information must be additionally transported. At the central position many different services can be combined, which provide very different kinds of user interfaces. From the view of the central function it is beneficial to find a generic attempt, which is independent from each offered service and user port respectively.

It is the object of the present invention to provide the aforementioned method, in such a manner that a generic identification of the user port, for a broad spectrum of services and network scenarios, is provided. Also, the information about the user port should be available immediately and a no error-prone state process should be expected.

The solution of this invention is provided by an aforementioned method, according to the invention, according to the characterizing part of claim 1, by a packet extension, which is attached to the packet, wherein the packet extension is read out directly from the packet at the central position. This packet extension is called "trailer" in this invention.

An advantageous embodiment of the method according to the invention is the fact that the attaching of the packet extension can be software based, since the here described packets are control packets, which are typically processed in the control plane and should not be seen as an overload of the CPU.

Preferably the packet extension has a generic format, which addresses the port to the network user. From the view of the central function it is beneficial to find a generic attempt, which is advantageously independent from each offered service and user port respectively.

Another advantageous embodiment of the method according to the invention is the fact that the user port information is immediately available, when needed and at the position where it is needed. That is in the packet itself, which must be processed. No additional delays appear in the processing, since the necessary information must first be asked for, in the system. E.g. an assignment MAC address to GEM port is already available, since advantageously the learning process took already place. Just as well as for example an assignment GEM port or VLAN ID to a system wide unique port information is already available after the configuration.

Preferably the central function is a DHCP relay agent, a PPP intermediate agent or a central function for authentication of a user. The information, from which user port the packet for authentication derives, decides the further authentication process.

Further features of the present invention will become clear from embodiments of the present invention that are described below with reference to the drawings.

The following embodiments describe the building of the packet extension.

When we proceed from application case IP-DSLAM and GPON, the best position to set the trailer is the interface card of the central shelf.

In the case of IP-DSALM, this is the xDSL card in the DSLAM shelf.

In the case of GPON, the best position to set the trailer is the PON interface card in the OLT.

### Brief Description of the Drawings

Figure 1 shows a prior art example of a GPON Access Network.
Figure 2 illustrates a first embodiment of the principal operation with the application IP-DSLAM.
Figure 3 illustrates a second embodiment, when the information in the interface card, from which port the packet comes, is not directly available any more or is not available in the CPU.
Figure 4 shows a third embodiment "GEM to trailer in the case of GPON".

### Detailed Description of the Drawings

Figure 1 represents a prior art example of a GPON access network (4). A user port (2) is located at an ONT (3), however the central function (1) is located in an OLT (9). Here, the central function (1) is at a downstream position (OLT -> ONT) compared to the user port (2). Thus, in the OLT (9), the information about the UNI (2) is no longer available. So, the user port (2) information must be additionally transported. From the view of the central function (1) it is beneficial to find a generic attempt, which is independent from each offered service and user port (2) respectively.

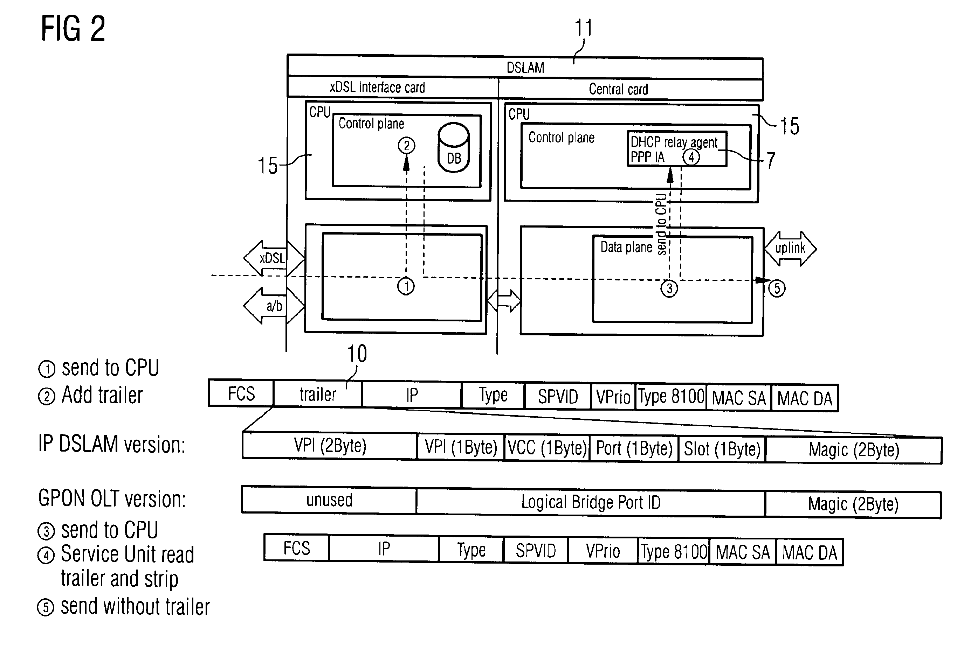

Figure 2 shows the principal operation with the application IP-DSLAM.

According to the first embodiment "xDSL port to trailer (10)", figure 2 discloses the case of an x-DSL interface card, wherein the user port (2) is a DSL port. Thus, the information about the user port (2) is present on the DSL interface card. For all relevant packets (14), the trailer (10) can be attached here and provided with the system wide unique user port identification.

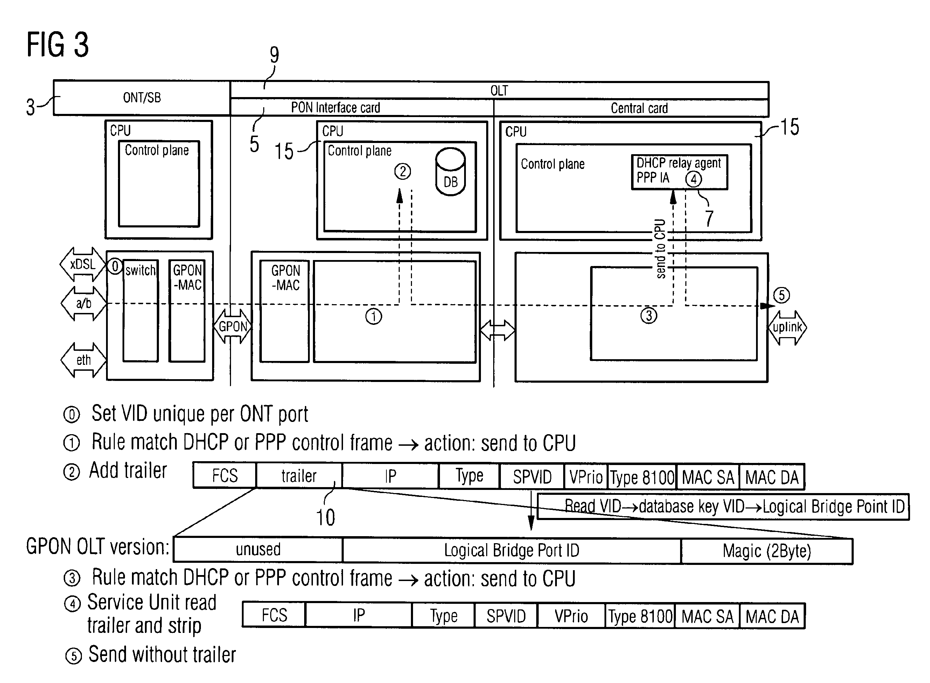

Figure 3 shows the second embodiment "VID to trailer (10)", wherein, when the information in the interface card, from which user port (2) the packet (14) arrives, is not directly available any more or is not available in the CPU (15), other information can be taken into account and can be transformed into the generic, system wide unique trailer information.

A possibility is the VLAN-ID of the VLAN tag corresponding IEEE 802.1Q tag. It is required that the VLAN-ID at the user port (2) is uniquely set per user port (2). In the downstream interface card there is a database located in which the assignment VLAN-ID to system wide unique trailer information is stored. Figure 3 illustrates the process in principle.

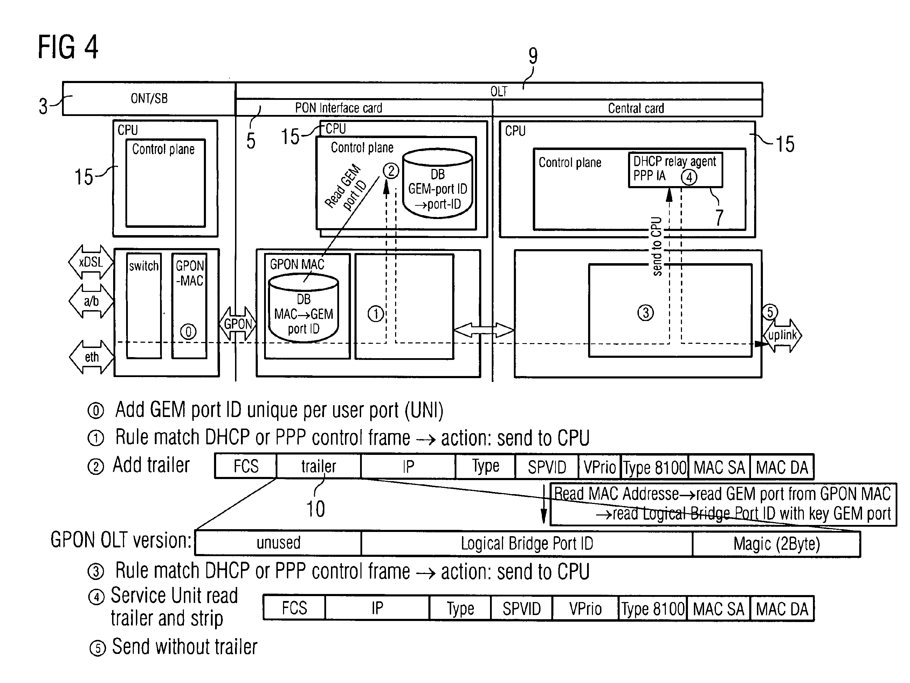

Figure 4 describes the third embodiment "GEM to trailer (10) in the case of GPON". Here, in the case of GPON there is further information available, which has a unique relationship to the UNI (2) within a GPON link. The ITU-Standard G.984.3, which describes the GPON Transmission and Convergance Layer, defines amongst others the GEM encapsulation for Ethernet frames. Ethernet is a local-area network (LAN) architecture developed by Xerox Corporation in cooperation with DEC and Intel in 1976. Ethernet uses a bus or star topology and supports data transfer rates of 10 Mbps. The Ethernet specification served as the basis for the IEEE 802.3 standard, which specifies the physical and lower software layers. It is one of the most widely implemented LAN standards.

A part of the GEM header is the GEM port ID. This ID is usually unique per UNI and GPON link. That is, between GEM port ID and UNI there is a N:1 relationship. So, with the GEM port ID and the GPON link as key, the UNI port (2) can be uniquely determined. The GPON MAC of the OLT (9) has to learn dynamically the assignment MAC address to GEM port ID, in the case of a service based VLAN scenarios. This assignment is necessary in order to be able to choose the correct GEM port, in downstream direction (OLT -> ONT), for the TC encapsulation.

If required, the CPU (15) can read out this information and determine the corresponding GEM port ID from the source MAC address in the packet (14). With this GPON link wide unique GEM port ID on the other hand, from the self-configured database, the system wide unique GEM port ID can be determined and entered into the trailer (14). Figure 4 (third embodiment) describes this method.

The described so called "trailer concept" has several advantages compared to prior art methods.

The generic identification of the user port, independent from the provided user interface, allows a generic implementation of the central service module.

The information about the user port is available immediately, when needed and at the position where it is needed, that is in the packet itself, which must be processed. No additional delays appear in the processing, since the necessary information must be first asked for, in the system. The assignment MAC address to GEM port is already available, since the learning process already took place. Just as well as the assignment GEM port or VLAN ID to system wide unique port information is already available after the configuration.

No error-prone state process must be implemented, as it would be necessary with a solution with internal query when needed.

Through the combination of different origin keys, like the xDSL port, the VID or the GEM port, a broad spectrum of services and Ethernet scenarios is provided.

So according to the GPON standard, the interface between ONT and OLT remains an open interface, without the necessity to implement proprietary parts.

### Reference signs

- 1: central function
- 2: port to the network user / UNI
- 3: ONT (Optical Network Terminal) / first access node
- 4: access network
- 5: PON interface card 1..n
- 6: BRAS / PPPoE termination
- 7: DHCP relay agent PPP IA
- 8: aggregation network
- 9: OLT (Optical Line Termination) / central position
- 10: trailer / packet extension
- 11: DSLAM
- 12: PPP intermediate agent
- 13: user
- 14: packet
- 15: CPU

## Claims

1. A method for determining user port information for a central function, wherein
for the central function in a central position the information is necessary, from which user interface a corresponding packet derives,
the central function is centrally implemented at a downstream position, at which the user port information is not available,
the user port is located at a first access node, whereas the central function is located in the central position,
**characterized in that**,
a packet extension (10) is attached to the packet (14), the packet extension (10) is read out directly from the packet (14) at the central position (9).

2. A method according to claim 1, **wherein** the attaching of the packet extension (10) is software based.

3. A method according to claim 1 or 2, **wherein** the packet extension (10) has a generic format, which addresses the user port (2) to a network user (13).

4. A method according to any one of claim 1 to 3, **wherein** the user port (2) information is immediately available, when it is needed and at the position where it is needed.

5. A method according to any one of claims 1 to 4, **wherein** the central function (1) is a DHCP relay agent (7), a PPP intermediate agent (12) or a central function (1) for authentication.
